# EUROPÄISCHE PATENTSCHRIFT

(11) **EP 1 203 058 B1**
(45) Veröffentlichungstag und Bekanntmachung des Hinweises auf die Patenterteilung: **30.11.2005**
(21) Anmeldenummer: 00954608.6
(22) Anmeldetag: 08.08.2000
(51) Int. Cl.: C09K 3/00, E06B 3/663

(54) **ELASTISCHE DICHTUNGSMATERIALIEN AUF DER BASIS VON BLOCKCOPOLYMEREN AUS ISOBUTEN UND VINYLAROMATISCHEN MONOMEREN**
ELASTIC SEALING MATERIAL ON THE BASIS OF BLOCK COPOLYMERS MADE OF ISOBUTENE AND VINYL AROMATIC MONOMERS
MATERIAUX D'ETANCHEITE ELASTIQUES A BASE DE COPOLYMERES BLOCS D'ISOBUTENE ET DE MONOMERES VINYLO-AROMATIQUES

(30) Priorität: 09.08.1999 DE 19937562
(43) Veröffentlichungstag der Anmeldung: 08.05.2002
(73) Patentinhaber: BASF Aktiengesellschaft, 67056 Ludwigshafen (DE)
(72) Erfinder: RATH, Hans, Peter, 67269 Grünstadt (DE); LANGE, Arno, 67098 Bad Dürkheim (DE); MACH, Helmut, 69115 Heidelberg (DE); KNOLL, Konrad, 67069 Ludwigshafen (DE)
(74) Vertreter: Kinzebach, Werner
(86) Internationale Anmeldenummer: PCT/EP2000/007705
(87) Internationale Veröffentlichungsnummer: WO 2001/010969

(56) Entgegenhaltungen:
- EP-A- 0 754 743
- EP-A- 0 853 096
- EP-A- 0 866 096
- WO-A-98/30649
- DE-A- 19 624 236

## Beschreibung

Die vorliegende Erfindung betrifft die Verwendung von Blockcopolymeren aus Polymerblöcken A, die im Wesentlichen aus Isobuten aufgebaut sind, und Polymerblöcken B, die im Wesentlichen aus Einheiten aufgebaut sind, welche sich von vinylaromatischen Monomeren ableiten, als elastische Dichtungsmaterialien.

Flexible Dichtungsmaterialien, auch als Dichtungsmassen bezeichnet, finden beispielsweise zur Abdichtung von Fugen Verwendung. Typische Dichtungsmassen bestehen aus Polysulfid, Butylkautschuk, Silikonen oder elastischen Polyurethanen. Je nach Einsatz müssen die Dichtungsmaterialien ein strenges Anforderungsprofil erfüllen. Sie dürfen bei extremen Temperaturschwankungen ihre Elastizität nicht verlieren und dürfen insbesondere bei tiefen Temperaturen nicht spröde werden. Gleichzeitig wird oftmals eine hohe mechanische Festigkeit gewünscht. Ferner sollen die Dichtungsmaterialien gegenüber Witterungseinflüssen und/oder gegenüber Chemikalien, beispielsweise gegenüber Haushaltsreinigern, stabil sein. Für eine Reihe von Anwendungen ist insbesondere eine äußerst geringe Gasdurchlässigkeit, insbesondere für Luft, Argon und Wasserdampf Voraussetzung.

So werden beispielsweise Dichtungsmaterialien mit hoher Elastizität und mechanischer Festigkeit bei gleichzeitig niedriger Gasdurchlässigkeit für die Herstellung von Isolierglasfenstern benötigt. Isolierglasfenster bestehen in der Regel aus zwei oder mehreren Glasscheiben, die durch Abstandshalter, beispielsweise durch Aluminiumschienen oder Aluminiumhohlprofile, auf Abstand gehalten werden. Der Zwischenraum zwischen den einzelnen Glasscheiben wird in der Regel aus Gründen der besseren Isolierung mit einem Gas, beispielsweise Argon oder Schwefelhexaflorid gefüllt. Die Fugen zwischen den einzelnen Glasscheiben, insbesondere die Fugen zwischen den Aluminiumprofilen und den Glasscheiben, müssen mit einem Dichtungsmaterial versiegelt werden, das einerseits das Entweichen des isolierenden Gases und andererseits ein Eindringen von Luftfeuchtigkeit, d.h. Luft und Wasserdampf, in den Zwischenraum zwischen den Glasscheiben verhindert.

Der Stand der Technik löst das Problem indem er die als Abstandshalter wirkenden Alumiumprofile mit einer Schicht aus Polyisobuten auf die Glasscheiben aufklebt, welches gleichzeitig als Dichtmasse wirkt. Auf diese Weise wird eine hohe Gasdichtigkeit erreicht. Diese Art der Abdichtung führt jedoch zu keiner ausrechenden mechanischen Festigkeit des Scheibenverbunds und ist empfindlich gegen mechanische Beschädigungen. Daher wird dieser Aufbau im Stand der Technik mit einer weiteren Dichtmasse mit erhöhter mechanischer Festigkeit abgedeckt. Hierfür kommen beispielsweise kalt- oder warmvernetzbare Dichtungsmaterialien aus Polysulfid, Butylkautschuk, Silikonen oder Polyurethanen in Betracht. Die Verwendung zweier Dichtungsmaterialien macht die Anbringung derartiger Dichtungen aufwendiger und verteuert somit die Herstellungskosten für Isolierverglasung. Zudem weisen derartige Dichtungsmaterialien nur eine unzureichende Gasundurchlässigkeit auf.

Der vorliegenden Erfindung lag somit die Aufgabe zugrunde, ein flexibles Dichtungsmaterial bereitzustellen, das gegenüber Gasen wie Argon oder Wasserdampf undurchlässig ist und gleichzeitig eine hohe Elastizität bei ausreichender mechanischer Festigkeit aufweist.

Es wurde überraschenderweise gefunden, dass dieses an Dichtungsmaterialien gestellte Anforderungsprofil von Blockcopolymeren erfüllt wird, die wenigstens einen Polymerblock A, welcher aus Isobuten-Einheiten aufgebaut ist, und wenigstens zwei weitere Polymerblöcke B, welche aus Einheiten aufgebaut sind, die sich von vinylaromatischen Monomeren ableiten, enthalten.

Demnach betrifft die vorliegende Erfindung die Verwendung von linearen oder sternförmigen Blockcopolymeren alleine oder zusammen mit hierfür üblichen Zusätzen, ausgewählt unter Verarbeitungshilfamitteln, UV-Stabilisatoren und Füllstoffen in einer Menge von bis zu 40 Gew.-%, wobei die Blockcopolymere wenigstens einen Polymerblock A, der im Wesentlichen aus Isobuten-Einheiten aufgebaut ist, und wenigstens zwei Polymerblöcke B aufweisen, die im Wesentlichen aus Einheiten aufgebaut sind, die sich von vinylaromatischen Monomeren ableiten und der allgemeinen Formel I gehorchen, 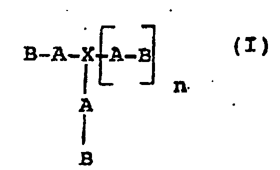 worin
- A: für einen Polymerblock A Steht,
- B: für einen Polymerblock B steht,
- n: für 0, 1 oder 2 steht und
- x: eine Einfachbindung oder einen n+2-valenten Kohlenwasser- stoffrest mit bis zu 30 C-Atomen bedeutet,
als elastische Dichtungsmaterialien.

Sofern X für einen n+2-valenten Kohlenwasserstoffrest steht, ist dieser herstellungsbedingt und resultiert aus dem jeweiligen Polymerisationsinitiator. Zusammen mit dem ihn umgebenden Polymerblöcken A bildet er den zentralen Polymerblock, welcher im wesentlichen aus Isobuten-Einheiten aufgebaut ist.

Blockcopolymere auf der Basis von Isobuten und vinylaromatischen Monomeren sowie Verfahren zu ihrer Herstellung sind aus dem Stand der Technik bekannt (siehe beispielsweise die US 4,946,899 und darin genannte Literatur).

Erfindungsgemäß enthält das Blockcopolymer wenigstens einen Polymerblock A, der im Wesentlichen aus Isobuten-Einheiten aufgebaut ist. Ein Teil der Isobuten-Einheiten in den Polymerblöcken kann auch durch monoolefinisch ungesättigte Monomere mit Silylgruppen ersetzt sein. Typische Silylgruppen sind Trialkoxysilylgruppen, worin der Alkoxyrest in der Regel 1, 2, 3 oder 4-Kohlenstoffatome aufweist, und seinerseits mit C₁-C₄-Alkoxy substitutiert sein kann. Beispiele für derartige Reste sind Trimethoxysilyl, Triethoxysilyl, Tri-n-propoxysilyl, Tri(methoxyethyl)silyl. Die Polymerblöcke A enthalten dann vorzugsweise, bezogen auf das Gesamtgewicht aller Polymerblöcke A im Blockcopolymeren bis zu 20 Gew.-%, beispielsweise 0,1 bis 20 Gew.-% und insbesondere 0,5 bis 10 Gew.-% derartiger Monomere einpolymerisiert. Beispiele für monoolefinisch ungesättigte Monomere mit Trialkoxysilylgruppen sind insbesondere C₂-C₁₀-Monoolefine, die mit einer Tri-C₁-C₄-alkoxysilylgruppe, substituiert sind: Hierzu zählen Trialkoxysilyl-substituiertes Ethen, Propen, n-Buten, Isobuten, n-Penten, 2-Methylbuten-1 oder 2-Methylpenten-1. Beispiele für derartige Monomere sind: 1-(Trimethoxysilyl)ethen, 1-(Trimethoxysilyl)propen, 1-(Trimethylsilyl)-2-methylpropen-2, 1-(Tri(methoxyethoxy)silyl)ethen, 1-(Tri(methoxyethoxy)silyl)propen, 1-(Tri(methoxyethoxy)silyl)-2-methylpropen-2. Geeignet sind auch Styrol-Derivate, die eine der vorgenannten Trialkoxysilylgruppen aufweisen, z.B. 2-, 3- oder 4-Trimethoxysilylstyrol, oder Verbindungen vom Typ: CH₂=CH-C₆H₄-Q-Si(OCH₃)₃, worin Q für einen bifunktionellen Rest, z.b. eine C₁-C₁₀-Alkylengruppe, die gegebenenfalls durch ein oder mehrere, nicht benachbarte Sauerstoffatome oder Iminogruppen unterbrochen sein kann, z.B für -CH₂-NH-C₂H₄-NH-C₃H₆-, steht. Derartige von Styrol abgeleitete Monomere können auch zur Modifizierung des Styrolblocks verwendet werden.

Erfindungsgemäß enthält das Blockcopolymer wenigstens einen weiteren Polymerblock B, der aus Einheiten aufgebaut ist, die sich von vinylaromatischen Monomeren ableiten. Geeignete vinylaromatische Monomere sind: Styrol, α-Methylstyrol, C₁-C₄-Alkylstyrole wie 2-, 3- und 4-Methylstyrol, 4-tert.-Butylstyrol sowie 2-, 3- oder 4-Chlorstyrol. Bevorzugte vinylaromatische Monomere sind Styrol und 4-Methylstyrol sowie deren Mischungen. Ganz besonders bevorzugtes vinlyaromatisches Monomer ist Styrol, das bis zu 20 Gew.-% durch 4-Methylstyrol ersetzt sein kann.

In der Formel (I) steht X vorzugsweise für einen 2- oder 3-valenten Kohlenwasserstoffrest mit bis zu 30 C-Atomen, vorzugsweise mit 5 bis 20 C-Atomen. Der Rest X verbindet die ihn umgebenden, aus Isobuten aufgebauten Polymerblöcke A zu einem zentralen Polymerblock, der im Wesentlichen aus Isobuten-Einheiten aufgebaut ist. Vorzugsweise steht X für einen der folgenden Reste:

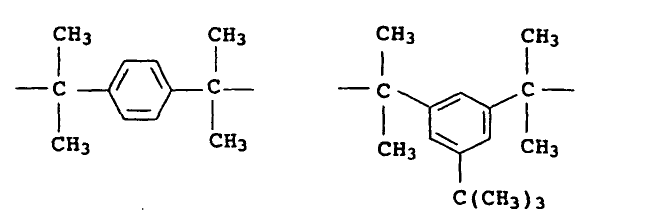

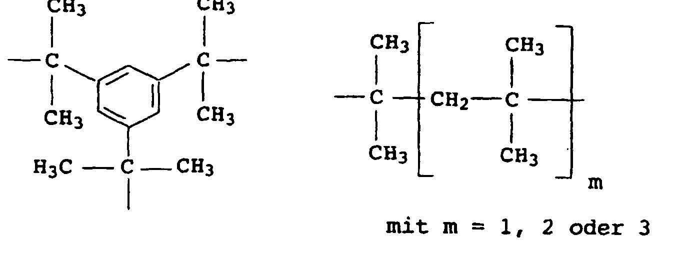

Das zahlenmittlere Molekulargewicht des zentralen Polyisobutenblocks entspricht näherungsweise der Summe der zahlenmittleren Molekulargewichte aller Polymerblöcke A in Formel I. Diese liegt in der Regel im Bereich von 20.000 bis 100.000 Dalton, vorzugsweise im Bereich von 25.000 bis 90.000 Dalton und ganz besonders bevorzugt im Bereich von 30.000 bis 80.000 Dalton. Das Verhältnis des Gesamtgewichts aller Polymerblöcke A zum Gesamtgewicht aller Polymerblöcke B liegt in der Regel im Bereich von 1:1 bis 9:1, vorzugsweise im Bereich von 1,2:1 bis 4:1 und insbesondere im Bereich von 3:2 bis 7:3.

Im Interesse einer mechanischen Festigkeit hat es sich als vorteilhaft erwiesen, wenn der oder die Polymerblöcke B, die aus vinylaromatischen Monomeren aufgebaut sind, ein zahlenmittleres Molekulargewicht Mₙ von wenigstens 6.000 Dalton, insbesondere im Bereich von 7.000 bis 20.000 Dalton aufweisen.

Ferner hat es sich als vorteilhaft erwiesen, wenn der oder die Polymerblöcke A eine enge Molekulargewichtsverteilung aufweisen. Die Breite der Molekulargewichtsverteilung lässt sich anhand ihrer Dispersizität (Verhältnis von gewichtsmittlerem Molekulargewicht zu zahlenmittlerem Molekulargewicht M_{w}/Mₙ) charakterisieren. Die Dispersität M_{w}/Mₙ liegt vorzugsweise unterhalb 1,4, insbesondere unterhalb 1,3 und besonders bevorzugt unterhalb 1,2.

Alle Angaben zu Molekulargewichten beziehen sich auf Werte, wie sie mittels Gelpermeationschromatografie (GPC) ermittelt wurden. Die Gelpermeationschromatographie erfolgte mit THF als Fließmittel und CS₂ als Referenz an zwei hintereinander geschalteten Säulen (L 300 mm, d 7,8 mm), wobei die erste Säule mit Styragel HR5 (Molekulargewichtsbereich 50.000 bis 4 x 10⁶) und die zweite Säule mit Styragel HR3 (Molekulargewichtsbereich 200 bis 30.000) der Fa. Waters gepackt waren. Die Detektion erfolgte über ein Differentialrefraktometer. Als Standards zur Bestimmung des Isobutenblocks wurden käufliche Polyisobutenstandards im Molmassenbereich 224 bis 1.000.000 der Fa. Polymer-Standards Service, Mainz, Deutschland, eingesetzt. Bei der Bestimmung der Blockcopolymere wurde zusätzlich ein Polystyrol-Eichfile und ein UV-Detektor herangezogen.

Die erfindungsgemäß zur Anwendung kommenden Blockcopolymere können nach den für die Herstellung von Blockcopolymeren üblichen Verfahren hergestellt werden. Nach einem ersten Verfahren stellt man einen ersten Polymerblock, der im Wesentlichen aus Isobuten-Einheiten aufgebaut ist, und der an seinem Ende funktionelle Gruppen trägt, nach bekannten Verfahren, beispielsweise durch kationisch initiierte Polymerisation her und nutzt diese funktionellen Gruppen als Startpunkt für die Polymerisation der vinylaromatischen Monomere oder als Verknüpfungspunkt mit bereits vorgefertigten Blöcken vinylaromatischer Monomere, die ihrerseits an den Endgruppen funktionelle Gruppen tragen. Beispielsweise kann man nach bekannten Verfahren Polymerblöcke aus Isobuten-Einheiten herstellen, die an ihrem Ende Halogen, z. B. Chlor, als funktionelle Gruppe tragen. Diese Halogenatome können nach bekannten Verfahren, beispielsweise durch Umsetzung mit metallorganischen Reagenzien wie Butyllithium, metalliert werden und dienen dann als Ausgangspunkt für eine anionische Polymerisation der vinylaromatischen Monomere.

Bei einem anderen Herstellungsverfahren stellt man zunächst einen Polymerblock her, der funktionelle Gruppen aufweist, welche durch Brönsted- oder Lewis-Säuren in kationische Zentren überführt werden können. Diese Zentren dienen dann als Startpunkt für eine kationisch initiierte Polymerisation vinylaromatischer Monomere oder von Isobuten. Verfahren hierzu sind dem Prinzip nach bekannt (siehe beispielsweise J. P. Kennedy et al. "Designed Polymers by Carbocationic Macromolecular Engineering", Carl Hanser-Verlag, Munich, Vienna, New York, Barcelona, s. 197 bis S. 220). Polyisobutene mit funktionellen Endgruppen, beispielsweise mit Halogen, lassen sich beispielsweise durch kationische Polymerisation von Isobutenen herstellen. Verfahren hierzu sind ebenfalls im Stand der Technik beschrieben (siehe beispielsweise J. P. Kennedy et al., eben da S. 167 bis S. 195).

Die erfindungsgemäß zur Anwendung kommenden Blockcopolymere können außerdem in einfacher Weise durch sequentielle, kationisch initiierte Polymerisation hergestellt werden, wobei man zunächst Isobuten oder ein Monomerengemisch, das im Wesentlichen aus Isobuten besteht, unter den Bedingungen einer "lebenden" kationischen Polymerisation polymerisiert und anschließend unter diesen Bedingungen eine Polymerisation der vinylaromatischen Monomere durchführt. Eine derartige Polymerisationssequenz ist dem Prinzip nach bekannt und wurde beispielsweise von J. P. Kennedy et al. in US 4,946,899 und Fodor et al. in J. Macromol. Sci.-Chem., A24(7), 1987, S. 735 bis S. 747, beschrieben. Wegen weiterer Details wird hiermit auf den Inhalt dieser Schriften in vollem Umfang Bezug genommen.

Bei diesem Verfahren wird zunächst Isobuten in Gegenwart eines Coinitiators, einer Lewis-Säure und gegebenenfalls einer Verbindung mit freiem Elektronenpaar, unter aprotischen Bedingungen umgesetzt.

Geeignete Coinitiatoren sind im einfachsten Fall monofunktionelle Verbindungen der allgemeinen Formel R-Y, worin R für einen Kohlenwasserstoffrest steht und Y eine durch eine Lewis-Säure aktivierbare Abgangsgruppe bedeutet. Die Anwesenheit der Lewis-Säure bedingt eine Abspaltung der Abgangsgruppe unter Ausbildung einer positiven Ladung oder einer positiven Polarisierung des Kohlenstoffatoms in R, an das die Abgangsgruppe Y gebunden ist.

Beispiele für typische Abgangsgruppen sind Halogene, wie Chlor, Brom oder Jod, insbesondere Chlor, lineare oder verzweigte C₁-C₆-Alkoxyqruppen, wie Methoxy, Ethoxy, n-Propoxy, Isopropoxy, n-Butoxy, Isobutoxy, sec.-Butoxy oder tert.-Butoxy sowie lineare oder verzweigte C₁-C₆-Acyloxygruppen, wie Acetoxy, Propionyloxy, n-Butyroxy, Isobutyroxy, n-Butylcarbonyloxy, Isobutylcarbonyloxy, oder sec.-Butylcarbonyloxy oder Pivalyloxy. Die Abgangsgruppe Y ist an ein Kohlenstoffatom im Rest R gebunden, das ein stabiles Carbokation ausbilden oder zumindest eine positive Partialladung stabilisieren kann. Vorzugsweise ist die Gruppe Y daher an ein sekundäres oder insbesondere an ein tertiäres Kohlenstoffatom gebunden. Insbesondere trägt das Kohlenstoffatom, an das Y gebunden ist, zwei Methylgruppen. Das Kohlenstoffatom, an das Y gebunden ist, trägt vorzugsweise eine Gruppe, die eine kationische Ladung durch Mesomerie stabilisieren kann, z. B. eine Vinylgruppe oder eine Phenylgruppe. Typische Reste R sind n-Butyl, Isobutyl, sec.-Butyl, tert.-Butyl, 2,4-Dimethylpent-2-yl, 2-Vinylprop-2-yl, sowie Reste, die sich von niederen Oligomeren des Isobutens ableiten und die der allgemeinen Formel 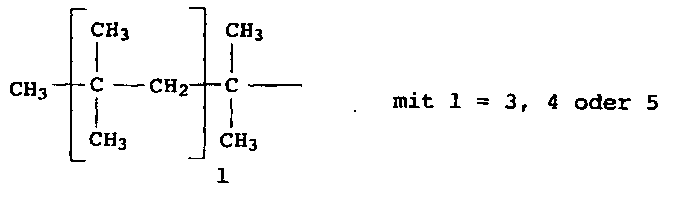 gehorchen.

Für die Herstellung der erfindungsgemäß bevorzugten Blockcopolymere mit einem zentralen Polymerblock, welcher im Wesentlichen aus Isobuten-Einheiten aufgebaut ist, verwendet man als Coinitiatoren Verbindungen, die wenigstens zwei funktionelle Abgangsgruppen enthalten, also Verbindungen der allgemeinen Formel II 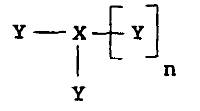 worin X und n die zuvor im Zusammenhang mit Formel I genannten Bedeutungen aufweist und Y für eine Abgangsgruppe steht, vorzugsweise für eine der im Zusammenhang mit R-Y genannten Abgangsgruppen. Y steht auch hier vorzugsweise für Halogen, C₁-C₆-Alkoxy oder C₁-C₆-Acyloxy und insbesondere für Chlor, Brom, Methoxy oder Acetoxy, wobei Chlor besonders bevorzugt ist. vorzugsweise ist Y auch hier an ein tertiäres Kohlenstoffatom gebunden. Das tertiäre Kohlenstoffatom weist vorzugsweise wenigstens eine und insbesondere zwei Methylgruppen auf. Vorzugsweise trägt dieses Kohlenstoffatom eine Gruppe, die eine kationische Ladung durch Resonanz stabilisieren kann, z. B. eine Vinyl- oder Phenylgruppe. Beispiele für besonders bevorzugte Coinitiatoren sind die im Folgenden aufgeführten Verbindungen: 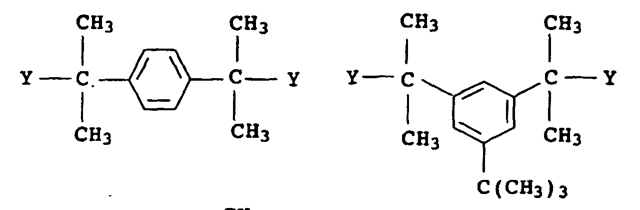 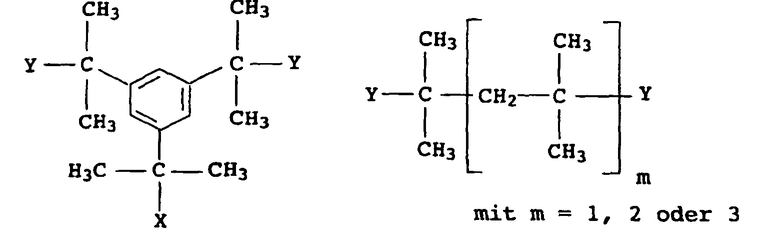 worin Y gleich oder verschieden sein können und eine der vorgenannten Bedeutungen aufweisen. Vorzugsweise steht Y auch in diesen Formeln für Chlor, Brom, Methoxy oder Acetoxy und insbesondere für Chlor.

Bei den zur Herstellung eingesetzten Lewis-Säuren handelt es sich in der Regel um Verbindungen wie Aluminiumhalogenide, Titan(IV)-halogenide, Borhalogenide, Zinn(IV)-halogenide, Zinkhalogenide, insbesondere die Chloride. Die vorgenannten Halogenide können teilweise anstelle der Halogenatome auch einen Alkylsubstituenten aufweisen. Beispiele hierfür sind die Mono- und Dialkylhalogenide des Bors und des Alumiums, insbesondere die Mono- und Dialkylchloride. Bei der Herstellung höherer Molekulargewichte haben sich auch Pentafluorphenylverbindungen der vorgenannten Elemente, insbesondere Tris(pentafluorphenyl)boran bewährt. Besonders bevorzugte Lewis-Säuren sind Titantetrachlorid und Bortrichlorid, insbesondere Titantetrachlorid. Bei der Herstellung der erfindungsgemäßen Blockcopolymere, insbesondere bei der Polymerisation des Isobutenblocks, liegt das molare Verhältnis von Coinitiator zu Lewis-Säure, bezogen auf die funktionellen Gruppen im Coinitiator, im Bereich von 2:1 bis 1:50, vorzugsweise im Bereich von 1:1 bis 1:20 und insbesondere im Bereich von 1:2 bis 1:10.

Das Molekulargewicht des zuerst polymerisierten Polymerblocks, der aus Isobuten-Einheiten aufgebaut ist, lässt sich bekannterweise über das Verhältnis von Isobuten zu Coinitiator einstellen. In der Regel liegt das Verhältnis Isobuten/Coinitiator im Bereich von 10.000:1 bis 100:1 und vorzugsweise im Bereich von 5.000:1 bis 500:1.

Bei der Herstellung der erfindungsgemäßen Blockcopolymere durch kationische Polymerisation hat es sich als vorteilhaft erwiesen, wenn man der Polymerisationsmischung noch eine weitere, nicht acide Verbindung mit freiem Elektronenpaar als weiteren Cokatalysator zusetzt. Derartige Verbindungen bilden vermutlich unter den Polymerisationsbedingungen Komplexe mit der Lewis-Säure und regulieren so deren Reaktivität. Beispiele für derartige Verbindungen sind Dialkylether wie Diisopropylether, cyclische Ether, wie Tetrahydrofuran, Trialkylamine wie Triethylamin oder Diisopropylamin, Amide, wie N,N-Dimethylacetamid, C₁-C₄-Alkylester aliphatischer C₁-C₆-Carbonsäuren, wie Ethylacetat, Dialkylthioether oder Alkylarylthioether, wie Methylphenylsulfid, Dialkylsulfoxide, wie Dimethylsulfoxid, Nitrile, wie Acetonitril, Trialkylphosphine oder Triarylphosphine, wie Trimethylphosphin, Triethylphosphin, Tri-n-butylphosphin und Triphenylphosphin, Pyridin oder Alkylpyridine. Besonders bevorzugt hierunter sind Pyridin und sterisch gehinderte Pyridin-Derivate. Sterisch gehinderte Pyridine sind solche die zumindest in der 2- und 6-Position des Pyridinringes sterisch anspruchsvollen Alkylgruppen aufweisen, z. B. 2,6-Diisopropylpyridin und 2,6-Di-tert.-butylpyridin. Sterisch gehinderte Pyridinderivate dienen vermutlich als Protonenfallen und verhindern somit, dass Protonen aus ubiquitären Wasserspuren eine weitere kationische Polymerisation initiieren.

In der Regel wird man die kationische Polymerisation zur Herstellung der erfindungsgemäßen Blockcopolymere in einem Lösungsmittel durchführen. Geeignete Lösungsmittel, sind solche, die unter den in der Regel niedrigen Reaktionstemperaturen noch flüssig sind und weder Protonen abspalten noch freie Elektronenpaare aufweisen. Beispiele hierfür sind cyclische und acyclische Alkane, wie Ethan, Iso- und n-Propan, n-Butan, Isobutan, n-Pentan und Isomere des Pentans, Cyclopentan, n-Hexan und Hexanisomere, n-Heptan und Heptanisomere und alkylsubstituierte Cyclohexane. Bevorzugt werden Mischungen dieser unpolaren Lösungsmittel mit halogenierten Kohlenwasserstoffen, wie Methylchlorid, Dichlormethan, Ethylchlorid, Dichlorethane und Neopentylchloride eingesetzt. Hierdurch lässt sich die Polarität des Lösungsmittels in gewünschter Weise einstellen. Eine höhere Polarität des Lösungsmittels hat in der Regel eine höhere Reaktionsgeschwindigkeit zur Folge. Umgekehrt verbessert sich die Löslichkeit der Polymere mit einer Erniedrigung der Polarität. Zudem hat eine niedrigere Lösungsmittelpolarität eine geringere Übertragungswahrscheinlichkeit und damit eine höhere Einheitlichkeit des Polymeren zur Folge.

Vor ihrem Einsatz in der lebenden kationischen Polymerisation wird man die Einsatzstoffe, d. h. die Monomere und die Lösungsmittel, einer Reinigung und Trocknung unterwerfen. Eine hinreichende Trocknung der Monomere und des Lösungsmittels kann beispielsweise durch Behandlung mit trockenen Molekularsieben oder wasserfreiem Aluminiumoxid erfolgen. Die Trocknung der Monomere erfolgt vorzugsweise über Molekularsieb 3A und/oder Aluminiumoxid bei Temperaturen unterhalb 20 °C. Die Lösungsmittel werden in der Regel zuvor einer Vorreinigung an Ionentauschern oder durch Waschen mit Schwefelsäure oder mit Natronlauge unterworfen.

Zur Herstellung der Blockcopolymere der allgemeinen Formel II wird man in der Regel zunächst Isobuten oder im Wesentlichen Isobuten enthaltende Monomermischungen in einem der oben genannten Lösungsmittel in Anwesenheit der oben genannten Coinitiatoren und Lewis-Säuren bei Temperaturen unterhalb 0 °C, vorzugsweise im Bereich von -20 bis -120 °C und insbesondere im Bereich von -50 °C bis -100 °C umsetzen, bis der gewünschte Umsatz des Isobutens erreicht ist. Dann wird man die vinylaromatischen Monomere zur Erzeugung der Polymerblöcke B zugeben. Während oder nach der Zugabe der vinylaromatischen Monomere kann man die Reaktionstemperatur beibehalten oder, in Abhängigkeit von der Reaktivität der vinylaromatischen Monomere, anheben. In diesem Fall führt man die Polymerisation der vinylaromatischen Monomere bei Temperaturen oberhalb -50 °C, beispielsweise im Bereich von -20 °C bis +50 °C durch. In der Regel wird man die Polymerisation des Isobutens bis zu einem Umsatz von wenigstens 80 % und vorzugsweise wenigstens 90 % führen, bevor man die vinylaromatischen Monomere zugibt. Vorzugsweise erfolgt die Zugabe der vinylaromatischen Monomere, bevor 99 % des Isobutens und insbesondere bevor 98 % des Isobutens umgesetzt sind, da ansonsten die Gefahr besteht, dass ein Teil der reaktiven Endgruppen deaktiviert wird. Durch diese Verfahrensführung erreicht man, dass zunächst ein im Wesentlichen aus Isobuten-Einheiten aufgebauter, zentraler Polymerblock (bzw. mehrere Polymerblöcke A, die um den Rest X angeordnet sind) entsteht, der an seinen Enden Polymerblöcke B, aufgebaut aus vinylaromatischen Monomeren, trägt, welche im Wesentlichen unsegmentiert, d. h. frei von Isobuten-Einheiten, sind.

Die Reaktion kann diskontinuierlich (als Batch) oder semikontinuierlich (Semibatch, Zulaufverfahren) erfolgen. Vorzugsweise erfolgt die Herstellung jedoch diskontinuierlich in üblichen Rührkesseln. Vorzugsweise legt man in das Reaktionsgefäß wenigstens einen Teil und vorzugsweise die Gesamtmenge an Isobuten und Lösungsmittel vor. Dann fügt man zunächst den Coinitiator und gegebenenfalls den Cokatalysator und die Lewis-Säure, vorzugsweise in dieser Reihenfolge, bei der gewünschten Polymerisationstemperatur zu, und führt die Isobutenpolymerisation unter Kühlung bis zum gewünschten Umsatz. Dann fügt man die vinylaromatischen Monomere zu und erhöht gegebenenfalls die Polymerisationstemperatur.

Die Abführung der Reaktionswärme kann in der üblichen Weise, beispielsweise durch interne oder externe Kühlaggregate und/oder Siedekühlung, erfolgen.

Die Aufarbeitung kann in üblicher Weise erfolgen, wobei man zunächst die Lewis-Säure mit Wasser oder mit Alkoholen, z. B. mit Isopropanol, zersetzt und dann wässrig, extraktiv aufarbeitet. Dabei hat es sich als vorteilhaft erwiesen, wenn man nach Abbruch der Reaktion zunächst das zur Reaktion verwendete Lösungsmittel bzw. Lösungsmittelgemisch durch einen aromatischen Kohlenwasserstoff ersetzt um eine klare Phasentrennung zu erzielen. In der Regel wird die organische Phase, oder das daraus isolierte Rohprodukt einer Nachbehandlung mit trockenem Aluminiumoxid unterzogen, wobei Wasser, Halogene wie Chlorid, organische Halogenverbindungen und tert.-Butanol entfernt wird.

Das erfindungsgemäß erhältliche Blockcopolymer kann direkt als Dichtungsmaterial eingesetzt oder mit den üblichen Zusätzen konfektioniert werden. Die erfindungsgemäßen Blockcopolymere, insbesondere die Blockcopolymere der allgemeinen Formel I zeichnen sich durch eine hohe Wasserdampf- und Gasdichtigkeit aus, die trotz der Polystyrolblöcke mit der des Isobutens vergleichbar sind. Die erfindungsgemäßen Blockcopolymere sind äußerst elastisch und im Unterschied zu Isobuten deutlich reißfester und weisen eine wesentlich erhöhte Oberflächenhärte auf. Weiterhin zeigen die Blockcopolymere ein thermoplastisches Verhalten, was eine einfache Verarbeitung, z. B. durch Schmelzextrusion, ermöglicht.

Die Untersuchung der erfindungsgemäßen Blockcopolymere mittels DSC (Differential scanning calorimetry) zeigt einen schmalen, glasartigen Übergang oberhalb 90 °C, der auf weitgehend unsegmentierte Polymerblöcke B hinweist.

Aufgrund dieser Eigenschaften sind die erfindungsgemäßen Blockcopolymere in besonderem Maße zur Herstellung von elastischen Dichtungsmaterialien bzw. Dichtungsmassen für eine Vielzahl von Anwendungen geeignet.

Die erfindungsgemäßen Blockcopolymere können als solche als Dichtungsmaterialien verwendet werden. Die erfindungsgemäßen Dichtungsmaterialien können aber auch je nach Anwendungsgebiet zur Herstellung von Dichtungsmassen eingesezt werden, die neben den erfindungsgemäßen Dichtungsmaterialien üblichen Zusätze enthalten, beispielsweise W-Stabilisatoren und Verarbeitungshilfsmittel und/oder Füllstoffe in den für Dichtungsmassen üblichen Mengen. Insbesondere können derartige Dichtungsmassen auf Basis der erfindungsgemäßen Dichtungsmaterialien bis zu 40 Gew.-%, vorzugsweise bis zu 20 Gew.-% übliche Füllstoffe, z. B. Ruße, Metallabrieb, anorganische oder organische Pigmente oder sonstige Füllstoffe enthalten. Geeigenete Zusätzte und Füllstoffe sind dem Fachmann bekannt. Hierbei handelt es sich um Füllstoffe, wie sie üblicherweise in Dichtungsmassen auf der Basis von Silikonkautschuken, Butylkautschuken oder Polysulfid eingesetzt werden.

Aufgrund ihres Eigenschaftsprofils sind die erfindungsgemäßen flexiblen Dichtungsmaterialien bzw. daraus hergestellte Dichtungsmassen insbesondere zur Abdichtung der Randfugen von Isolierglasscheiben geeignet. Demnach betrifft die vorliegende Erfindung auch die Verwendung der erfindungsgemäßen Blockcopolymere in Dichtungsmassen zur Abdichtung der Randfugen in Isolierglasscheiben. Sie betrifft auch Isolierglasscheiben mit einer Randfugendichtung, die als flexibles Dichtungsmaterial eines der zuvor beschriebenen Blockcopolymere enthält. Isolierglasscheiben, die mit derartigen Randfugendichtungen versehen sind, zeichnen sich durch eine erhöhte Lebensdauer, insbesondere im Hinblick auf das unerwünschte Eindringen von Feuchtigkeitsspuren in die zwischen den Glasscheiben befindlichen Zwischenräume, aus.

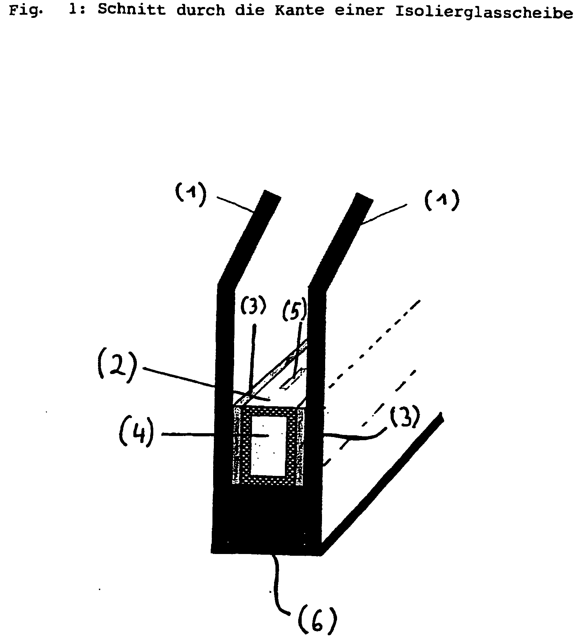

In der Figur 1 ist beispielhaft eine Isolierglasscheibe erläutert. In der gezeigten Anordnung weist die Isolierglasscheibe ein zwischen zwei Glasscheiben (1) angeordnetes Aluminiumhohlprofil (2) als Abstandshalter auf, das mit den Glasscheiben (1) durch eine Verklebung (3) verbunden ist. Die Verklebung (3) kann mit einem Polyisobuten des Standes der Technik oder mit einem erfindungsgemäßen Blockcopolymeren ausgeführt sein. Das Aluminiumhohlprofil (2) kann ein Trockenmittel (4) enthalten. In diesem Fall weist das Hohlprofil (2) Öffnungen (5), z. B. in Form von Löchern oder Schlitzen, in den Flächen auf, die die Abgrenzung zu dem zwischen den Glasscheiben befindlichen Hohlraum bilden. Ferner weisen derartige Isolierglasscheiben eine flexible Abdeckung (6) der aus dem Hohlprofil (2) und der Scheiben (1) gebildeten Randfugen auf. Als Material für die Abdeckung (6) der Randfugen setzt man die erfindungsgemäßen Dichtungsmaterialien ein.

Die so erhaltenen Scheibenverbunde zeichnen sich durch eine verbesserte mechanische Stabilität und eine erhöhte Stabilität gegenüber dem Eindringen von Luftfeuchtigkeit in den Scheibenzwischenraum aus.

Aufgrund des besonderen Eigenschaftsprofils der erfindungsgemäßen Dichtungsmaterialien, d.h. ihrer geringen Gasdurchlässigkeit und ihrer hohen mechanischen Festigkeit, kann auf das aufwendige Aluminiumhohlprofil verzichtet werden. Demnach betrifft eine weitere erfindungsgemäße Ausgestaltung solche Isolierglasscheiben, die anstelle des Aluminiumhohlprofils einen beliebigen Abstandshalter, beispielweise aus Kunststoff, aufweisen. Dieser Abstandshalter wird direkt in die Randfugenabdichtung aus den erfindungsgemäßen Dichtungsmaterialien eingebettet. Eine Verklebung mit der Glasscheibe kann entfallen. Hierdurch wird die traditionelle Anordnung mit einem Aluminiumhohlprofil als Abstandshalter vereinfacht. Zudem führt das Weglassen des Aluminiumhohlprofils zu einer verbesserten Wärmedämmung der Scheiben. Aufgrund der hohen Wasserdampfdurchlässigkeit konnte bei Verwendung konventioneller Dichtungsmaterialien als Randfugendichtungen bislang auf ein Aluminiumhohlprofil nicht verzichtet werden.

### Beispiele

### 1. Analytik:

Die Bestimmung des Molekulargewichts erfolgte mittels GPC gegen Polyisobutenstandarts bzw. gegen ein Polystyrol-Eichfile in der oben beschriebenen Weise.

Bestimmung der Lösungsviskosität: Hierzu wurde die Viskosität nach Ubbelohde (Kapillardurchmesser 0,01 mm) bei 20°C in Isooktan (1g Polymer in 100 ml) nach DIN 51562 bestimmt.

Bestimmung der mechanischen Eigenschaften:
a) Härteprüfung: Es wurde die Härte nach Shore A (DIN 53505) bestimmt.
b) Im Zugversuch gemäß DIN 53504 wurde an 1,04 mm dicken und 4 mm breiten Probekörpern die Zugfestigkeit omax und die maximale Dehnbarkeit ε-Fₘₐₓ bestimmt.
   Die Wasserdampfdurchlässigkeit wurde nach ASTM F-1249 und die Durchlässigkeit für Argon nach DIN 53380 an Folien mit einer Dicke von 237 µm bestimmt.

### 2. Herstellung der erfindungsgemäßen Blockcopolymere (Beispiel 1)

Auf einem 2 1 Vierhalskolben mit Magnetrührer und Trockeneiskühlung werden zwei Tropftrichter mit Umgang von je 1 1 platziert. In beiden Tropftrichtern befindet sich über Glaswolle eine Schüttung aus trockenem Molekularsieb 3 A (16 h bei 2 mbar/150 °C getrocknet). In einem der Tropftrichter wird das Molsieb mit 250 g trockenem, saurem Ionentauscher (Lewatit SPC 118) überschichtet. Hier wird eine auf -78 °C gekühlte Mischung aus je 600 ml Methylenchlorid und 600 ml Hexan so aufgegeben, dass Molekularsieb und Ionenaustauscher geflutet sind und sich nach 30 Minuten das gesamte Lösungsmittel im Reaktionskolben befindet. Der andere Tropftrichter wird mit einem Trockeneiskühler versehen, über den 8 mol bei -78 °C über Molekularsieb 3 A mit mittlerer Verweilzeit von 15 min getrocknetes Isobuten einkondensiert werden. Der Isobutenzulauf erfolgt bei geflutetem Molsieb so, dass nach 25 min alles Isobuten im Kolben ist. Dann gibt man mittels Spritze über ein Septum 2 mmol getrocknetes 2,6 Di-tert.-Butylpyridin und 5 mmol Dicumylchlorid zu und kühlt mit Trockeneis auf -70 °C. Dann werden über das Septum 60 mmol TiCl₄ unter starkem Rühren zugegeben, eine Temperaturerhöhung (Polymerisation) ist unter diesen Bedingungen nicht zu erkennen. Nach 4 h wird eine Probe gezogen und 0,4 mol Styrol über die Isobutenreinigung unter gleichen Zulaufbedingungen wie Isobuten zugesetzt, dann das Reaktionsgemisch auf 20 °C erwärmt und nach 30 min durch Zusatz von 1 mol Isopropanol abgebrochen, 300 ml Toluol zugesetzt und in einen Scheidetrichter überführt, 3 Mal mit je 200 ml Wasser gewaschen und bei 200 °C bis 2 mbar ausdestilliert. Man erhält 260 g Polymer, die in Toluol gelöst, auf Silikonpapier gegossen und im Vakuumtrokkenschrank bei 140 °C und 30 mbar zu einem Film getrocknet werden.

Vor der Styrolzugabe wurde eine Probe der Reaktionsmischung entnommen und hinsichtlich ihres Molekulargewichts analysiert: Das zahlenmittlere Molekulargewicht Mₙ lag bei 43.000 Dalton, das Peakmaxiumum Mp bei 44.000 Dalton. Die Molekulargewichtsverteilung M_{w}/Mₙ betrug 1,18.

Die Lösungsviskosität des Blockcopolymeren lag bei 1,12 mm²/Sekunde.

Für das Blockcolpolmere wurde mittels DSC ein Glasübergang bei 95 °C ermittelt.
Härte nach Shore A: 39,2
σmax: 6,5 N/mm² ε-Fₘₐₓ: 500 %
Chlorgehalt (elementaranalytisch): 19 ppm
Durchlässigkeit für Wasserdampf: 0,35 g/(m²•d)
Durchlässigkeit für Argon: 135 g/(m²·d)

## Patentansprüche

1. Verwendung von linearen oder sternförmigen Blockcopolymeren alleine oder zusammen mit hierfür üblichen Zusätzen, ausgewählt unter Verarbeitungshilfsmitteln, UV-Stabilisatoren und Füllstoffen in einer Menge von bis zu 40 Gew.-%, wobei die Blockcopolymere wenigstens einen Polymerblock A, der im Wesentlichen aus Isobuten-Einheiten aufgebaut ist, und wenigstens zwei Polymerblöcke B aufweisen, die im Wesentlichen aus Einheiten aufgebaut sind, die sich von vinylaromatischen Monomeren ableiten und der allgemeinen Formel I gehorchen, 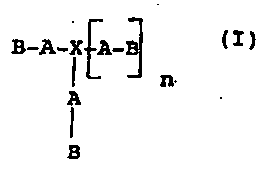 worin
A für einen Polymerblock A steht,
B für einen Polymerblock B steht,
n für 0, 1 oder 2 steht und
X eine Einfachbindung oder einen n+2-valenten Kohlenwasser- stoffrest mit bis zu 30 C-Atomen bedeutet,
als elastische Dichtungsmaterialien.

2. Verwendung nach Anspruch 1, wobei die Summe des zahlenmittleren Molekulargewichts aller Polymerblöcke A im Bereich von 30.000 bis 100.000 Dalton liegt.

3. Verwendung nach einem den vorhergehenden Ansprüche, wobei die Polymerblöcke B ein zahlenmittleres Molekulargewicht Mₙ oberhalb 6.000 Dalton aufweisen.

4. Verwendung nach einem den vorhergehenden Ansprüche, wobei das Verhältnis des Gesamtgewichts aller Polymerblöcke A zum Gesamtgewicht aller Polymerblöcke B im Bereich von 1:1 bis 9:1 liegt.

5. Verwendung nach einem den vorhergehenden Ansprüche, worin die polymerblöcke A bis zu 20 Gew.-%, bezogen auf das Gesamtgewicht aller Polymerblöcke A, monoolefinisch ungesättigte Monomere mit Trialkylsilylgruppen einpolymerisiert enthalten.

6. Verwendung nach einem der vorhergehenden Ansprüche, wobei die vinylaromatischen Monomere ausgewählt sind unter Styrol und p-Methylstyrol.

7. Verwendung nach einem der vorhergehenden Ansprüche, worin X für einen der folgenden Reste steht: 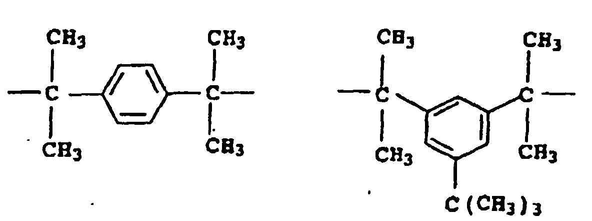 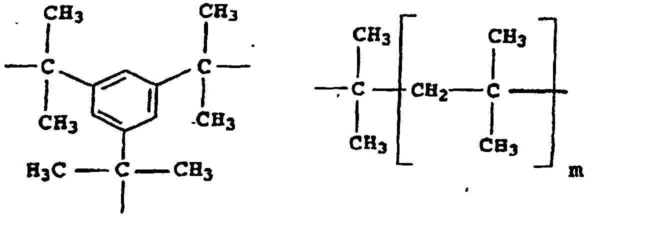 mit m = 1, 2 oder 3

8. Verwendung nach einem der vorhergehenden Ansprüche zur Abdichtung der Randfugen von Isolierglasscheiben.

9. Isolierglasscheibe mit einer flexiblen Randfugendichtung, die wenigstens ein Blockcopolymer, wie in einem der Ansprüche 1 bis 7 definiert, enthält.

## Claims

1. The use of linear or star block copolymers alone or together with customary additives for this purpose selected from processing assistants, UV stabilizers and fillers, in an amount of up to 40% by weight, the block copolymers comprising at least one polymer block A which is essentially composed of isobutene units and at least two polymer blocks B which are essentially composed of units which are derived from vinylaromatic monomers and conform to the general formula I 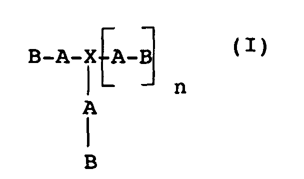 where
A is a polymer block A,
B is a polymer block B,
n is 0, 1 or 2 and
X is a single bond or an n+2-valent hydrocarbon radial of up to 30 carbon atoms,
as resilient sealing materials.

2. The use according to claim 1, wherein the sum of the number-average molecular weights of all polymer blocks A is from 30,000 to 100,000 daltons.

3. The use according to any of the preceding claims, wherein the polymer blocks B have a number-average molecular weight Mₙ of more than 6000 daltons.

4. The use according to any of the preceding claims, wherein the ratio of the total weight of all polymer blocks A to the total weight of all polymer blocks B is from 1:1 to 9:1.

5. The use according to any of the preceding claims, wherein the polymer blocks A comprise up to 20% by weight, based on the total weight of all polymer blocks A, of monoolefinically unsaturated monomers having trialkylsilyl groups as polymerized units.

6. The use according to any of the preceding claims, wherein the vinylaromatic monomers are selected from styrene and p-methylstyrene.

7. The use according to any of the preceding claims, wherein X is one of the following radicals: 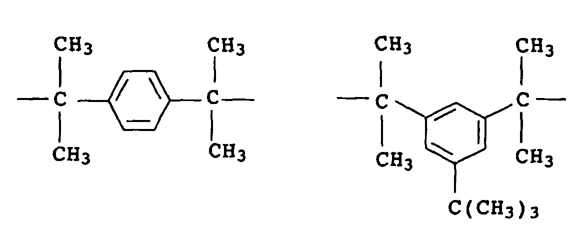 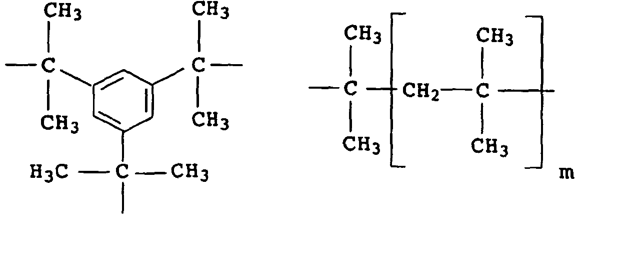 where m is 1, 2 or 3.

8. The use according to any of the preceding claims for sealing the edge joints of insulation glass panes.

9. An insulation glass pane having a flexible edge joint seal which comprises at least one block copolymer as defined in any of claims 1 to 7.

## Revendications

1. Utilisation de copolymères blocs linéaires ou en étoile, seuls ou en même temps que des additifs usuels à cet effet, choisis parmi des adjuvants de retraitement, des stabilisants aux UV et des matières de remplissage, en une quantité allant jusqu'à 40% en poids, les copolymères blocs présentant au moins un bloc de polymère A essentiellement constitué d'unités isobutène, et au moins deux blocs de polymère B essentiellement constitués d'unités dérivées de monomères vinylaromatiques et relevant de la formule crénérale I , 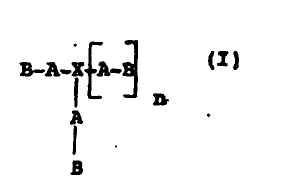 dans laquelle
A représente un bloc de polymère A,
B représente un bloc de polymère B,
n a une valeur de 0, 1 ou 2 et
x représente une liaison simple ou un radical hydrocarboné ayant une valence n + 2 et comportant jusqu'à 30 atomes de carbone,
en tant que matériaux d'étanchéité élastiques.

2. Utilisation selon la revendication 1, où la somme des poids moléculaires moyens en nombre de tous les blocs de polymère A est de l'ordre de 30 000 à 100 000 Dalton.

3. Utilisation selon l'une quelconque des revendications qui précèdent, où les blocs de polymère B présentent un poids moléculaire moyen en nombre Mₙ de plus de 6 000 Dalton.

4. Utilisation selon l'une quelconque des revendications qui précèdent, où le rapport du poids total de tous les blocs de polymère A au poids total de tous les blocs de polymère B est de l'ordre de 1 : 1 à 9 : 1.

5. Utilisation selon l'une quelconque des revendications qui précèdent, où les blocs de polymère A contiennent jusqu'à 20% en poids, par rapport au poids total de tous les blocs de polymère A, de monomères à insaturation monooléfinique, contenant des groupes trialkylsilyle, copolymérisés.

6. Utilisation selon l'une quelconque des revendications qui précèdent, où les monomères vinylaromatiques sont choisis parmi le styrène et le p-méthylstyrène.

7. Utilisation selon l'une quelconque des revendications qui précèdent, où x représente l'un des radicaux suivants : 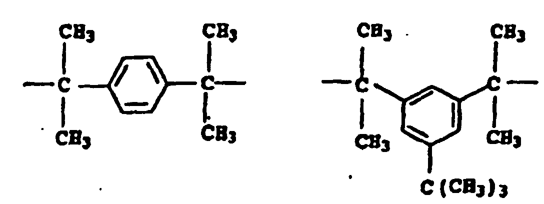 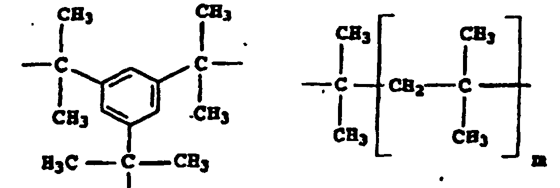 avec m = 1, 2 ou 3.

8. Utilisation selon l'une quelconque des revendications qui précèdent pour l'étanchement de joints périphériques de vitrages isolants.

9. Vitrage isolant à étanchement flexible des joints périphériques, contenant au moins un copolymère bloc tel que défini dans l'une quelconque des revendications 1 à 7.
